Europäisches Patentamt

European Patent Office

Office européen des brevets

(19)

(11) Veröffentlichungsnummer: **0 174 387**
**B1**

(12) **EUROPÄISCHE PATENTSCHRIFT**

(45) Veröffentlichungstag der Patentschrift:
19.07.89

(51) Int. Cl.⁴: **B 29 C 49/24**

(21) Anmeldenummer: 84110925.9

(22) Anmeldetag: 13.09.84

(54) **Vorrichtung zum Einbringen von Einlegeteilen, insbesondere Etiketten in Blasformnester.**

(43) Veröffentlichungstag der Anmeldung:
19.03.86 Patentblatt 86/12

(45) Bekanntmachung des Hinweises auf die Patenterteilung: 19.07.89 Patentblatt 89/29

(84) Benannte Vertragsstaaten:
DE

(56) Entgegenhaltungen:
DE--A-- 2 613 732
DE--A-- 2 849 604
FR--A-- 1 593 056
FR--A-- 1 593 083
US--A-- 3 292 209
US--A-- 3 674 391
US--A-- 4 359 314

(73) Patentinhaber: BEKUM Maschinenfabriken GmbH
Lankwitzerstrasse 14/15
D-1000 Berlin 42 (DE)

(72) Erfinder: Jahnel, Werner
Haus-Nr. 18
D-8061 Rummelshausen (DE)

(74) Vertreter: Huss, Carl-Hans, Dipl.-Ing. et al
Patentanwalt Griesstrasse 3 a Postfach 14 54
D-8100 Garmisch-Partenkirchen (DE)

## Beschreibung

Die Erfindung betrifft eine Einrichtung zum Einbringen von Etiketten und anderen Einlegeteilen für Behälterblasformmaschinen gemäß dem Oberbegriff des Patentanspruchs 1. Eine Einrichtung dieser Art ist durch die DE-A-1 168 053 bekannt geworden.

Die Erfindung befaßt sich mit der Verbindung von Einlegeteilen mit dem durch Aufweiten entstehenden Hohlkörper innerhalb der Blasform während des Blasvorganges, insbesondere mit dem Etikettieren innerhalb der Form, wobei dieses als Hauptanwendungsgebiet der Erfindung zur Erläuterung der Erfindung dient.

Im Rahmen des Vorgesagten betrifft die Erfindung speziell eine Vorrichtung zum Einbringen von Einlegeteilen bzw. Etiketten in die Formnester von Blasformmaschinen.

Blasformmaschinen sind in der Fachwelt wohlbekannt, und es gibt sie in verschiedenen Ausführungen, von welchen viele ein Paar beweglicher Platten aufweisen, auf welchen ein Paar trennbarer Formteile befestigt sind, die ein Formnest umschließen. Bei derartigen Blasformmaschinen wird das verformbare Material extrudiert oder auf andere Weise gebildet, und die Formteile werden mittels der Platten getrennt, um den Rohling aus verformbarem Material zwischen sich aufzunehmen. Die Formteile werden dann mittels der beweglichen Platten zusammengeführt und der Rohling wird blasverformt, um den erwünschten Artikel, beispielsweise einen Behälter oder dgl. herzustellen, häufig nachdem die Platten und die von ihnen getragenen geschlossenen Formteile in eine sog. Kalibrierstation verschoben wurden.

Es ist wünschenswert, insbesondere wenn die zu blasenden Gegenstände Seifendosen oder dgl. sind, die Etiketten thermoplastisch mit den Behältern während das Blasvorganges zu verbinden. Dies schließt das Einbringen eines vorgedruckten Etikettes in das Formnest in einem oder beiden Formteilen vor dem Schließen der Formteile um den Rohling und den darauffolgenden Blasformvorgang ein. Auf diese Weise mit den Behältern verbundene Etiketten weisen, wie für den Fachmann leicht erkennbar, deutliche Vorteile gegenüber den nach der Ausformung angebrachten Etiketten auf. Erstens und vor allem vermeidet die Etikettierung in der Form natürlich die Notwendigkeit der Durchführung eines nachfolgenden Etikettierschrittes. Zweitens, und annähernd ebenso wichtig ist, daß in der Form angebrachte Etiketten sehr viel widerstandsfähiger gegen Abscheuereffekte sind, die bei den Füllvorgängen, dem Transport usw. auftreten. Ganz allgemein ergeben die in der Form aufgebrachten Etiketten eine attraktivere Verpackung des jeweiligen Produktes.

Das Etikettieren in der Form ist jedoch nicht ohne Nachteile. Bei dem vorbeschriebenen Schließplatten-Maschinentyp verhindert die erforderliche Zeit, um das Etikett in die Form einzubringen, nachdem der vorher ausgeformte Behälter ausgeworfen wurde, den Ausstoß einer gegebenen Maschine beträchtlich. Bekannte Vorschläge zum maschinellen Einbringen der Etiketten in das Formnest (DE-PS 1 186 053, DE-OS 1 704 203) können diesen Leerlauf zwar reduzieren, den maschinengegebenen Ausstoß aber nicht wesentlich erhöhen, weil in beiden Fällen nach der Entnahme des zuletzt ausgeformten Artikels die Form solange offen bleiben muß, bis ein in die Form hinein und aus ihr heraus beweglicher Etikettenhalter bzw. Etikettenführer ein Etikett aufgenommen und an seinen Platz im Formnest gebracht hat.

Der vorliegenden Erfindung liegt daher die Aufgabe zugrunde, die vorgenannte Totzeit praktisch auf Null zu reduzieren, so daß der Maschinenausstoß praktisch der gleiche ist, als wenn die gegebene Maschine Artikel ohne Etikett ausformt.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Gemäß der Erfindung enthält wenigstens eines der das Formnest umschließenden Formteile ein verschiebbares Formeinsatzsystem, das mit wenigstens zwei Formsegmenten als Träger für die Etiketten bzw. Einlegeteile versehen ist. Wenn das Formeinsatzsystem in das Formteil geschoben ist, ist eines der Etikettenträgersegmente innerhalb des Formnestes und wirkt mit den zwei Formteilen zusammen, um eine vollständige Formhöhlung zu bilden, während das andere der Etikettenträgersegmente von außerhalb der Form zugänglich bleibt. Eine Schiebeeinrichtung verschiebt das bewegliche Formeinsatzsystem von einer Stellung zur anderen, so daß die Etikettenträgersegmente abwechselnd in das Formnest bewegt und außerhalb der Form zugänglich sind. Vorzugsweise transportiert ein Etikettenführer Etiketten von einem Etikettenvorrat auf jedes der zugänglichen Etikettenträgersegmente, so daß eines der Segmente mit einem Etikett versehen wird, während das andere einen Teil der Form bildet und das Etikett während des Blasvorganges aufbringt.

Nachdem ein Etikettenträgersegment zugänglich ist, so lange ein anderes Etikettenträgersegment sich in der Form befindet, muß die Maschine nicht auf das Einbringen des nächsten Etikettes warten, und die Zykluszeit der Maschine wird auf einen Punkt reduziert, der gleich oder annähernd gleich dem ist, der ohne Beachtung eines Etikettierens in der Form erreichbar wäre. Zusätzlich kann die Etikettenführeranordnung auf den Platten angebracht sein, um sich zusammen mit den Formteilen und dem beweglichen Formeinsatzsystem zu bewegen. Bei einer solchen Anordnung kann ein Etikett auf dem zugänglichen Etikettenträgersegment aufgebracht werden, während die Platten von einer Station der Blasformmaschine zu einer anderen bewegt werden. Noch wichtiger ist vielleicht, daß das Etikett dem zugänglichen Etikettenträgersegment zugeführt werden kann, während die Formteile geschlossen sind. Dies erlaubt, die Formteile um einen Rohling zu schließen und sie zur Kalibrierstation zu bewegen, in der die Flasche geblasen wird, während gleichzeitig ein neues Etikett zugeführt wird, gleichgültig ob die Etikettenüberführungseinrichtung an den Platten oder dem Maschinenrahmen angebracht ist.

Die Erfindung ist im folgenden unter Bezugnahme auf die Zeichnung anhand einiger Ausführungsformen von Vorrichtungen zum Einbringen von Etiketten in Blasformnester näher erläutert. Es stellen dar :

Fig. 1 eine Vorderansicht der hinteren Platte einer Blasformmaschine mit auf ihr angebrachter Einfachform und einer erfindungsgemäßen Vorrichtung zum Einbringen von Etiketten, gesehen von der Mittellinie zwischen den beiden auseinandergefahrenen Platten der Maschine aus ;

Fig. 2 eine Teilseitenansicht der Platten und der Vorrichtung gemäß Fig. 1 entlang der Linie II-II, wobei die Platten und die Formteile geschlossen dargestellt sind und ein Etikett an seinen Platz gebracht wird ;

Fig. 3 eine Vorderansicht der Anordnung gemäß Fig. 1 mit der Etikettenüberführungseinrichtung in einer Stellung zwischen den Positionen, in welchen ein Etikett aufgebracht wird ;

Fig. 4 eine perspektivische Teilansicht, teilweise gebrochen, des verschiebbaren Formeinsatzsystems und des Etikettenführers der Fig. 1 ;

Fig. 5 eine Vorderansicht einer zweiten Ausführungsform der vorliegenden Erfindung mit Darstellung der hinteren Platte einer Blasformmaschine mit einer Mehrfachform und an der Platte angebrachten Etikettenführern, gesehen von der Mittellinie der auseinandergefahrenen Platten der Maschine aus ;

Fig. 6 eine Teilseitenansicht der Platten und der Etikettenführer gemäß Fig. 5 entlang der Linie VI-VI ;

Fig. 7 eine Teilunteransicht des Formeinsatzsystems und der Schieberführung zur Verschiebung der Etikettenträgersegmente ;

Fig. 8 eine perspektivische Teilansicht eines Etikettenträgersegmentes und des zugehörigen Bereiches des Formnestes der Ausführungsform gemäß den Fig. 5 bis 7 und

Fig. 9 eine Teilvorderansicht einer dritten Ausführungsform der Erfindung mit Darstellung der hinteren Platte einer Blasformmaschine in der Kalibrierstation und mit stationär angebrachten Etikettenführern.

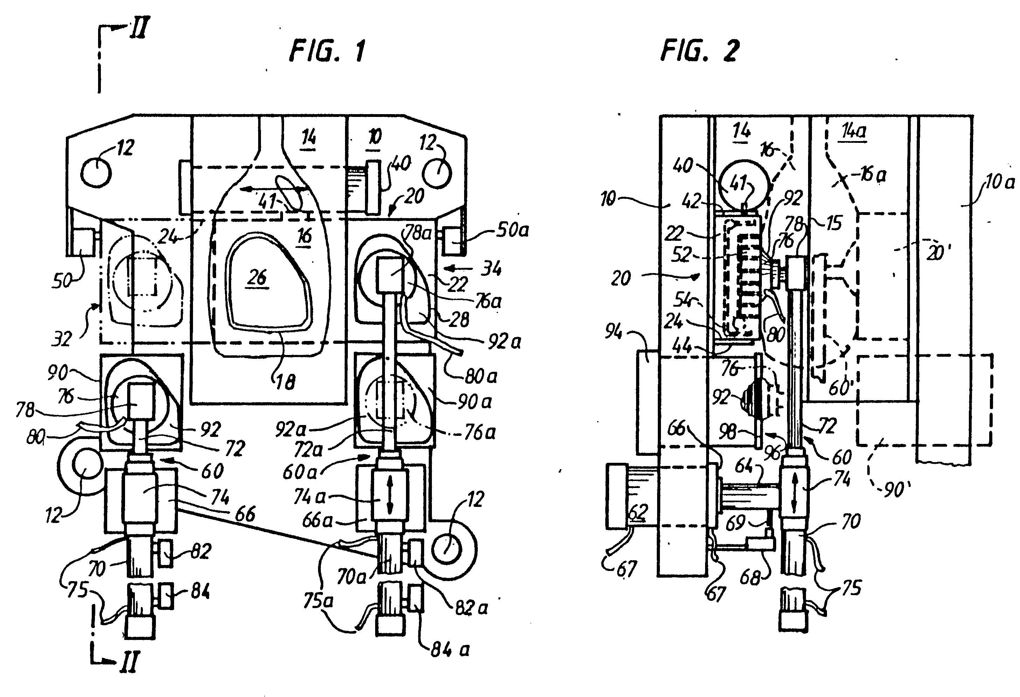

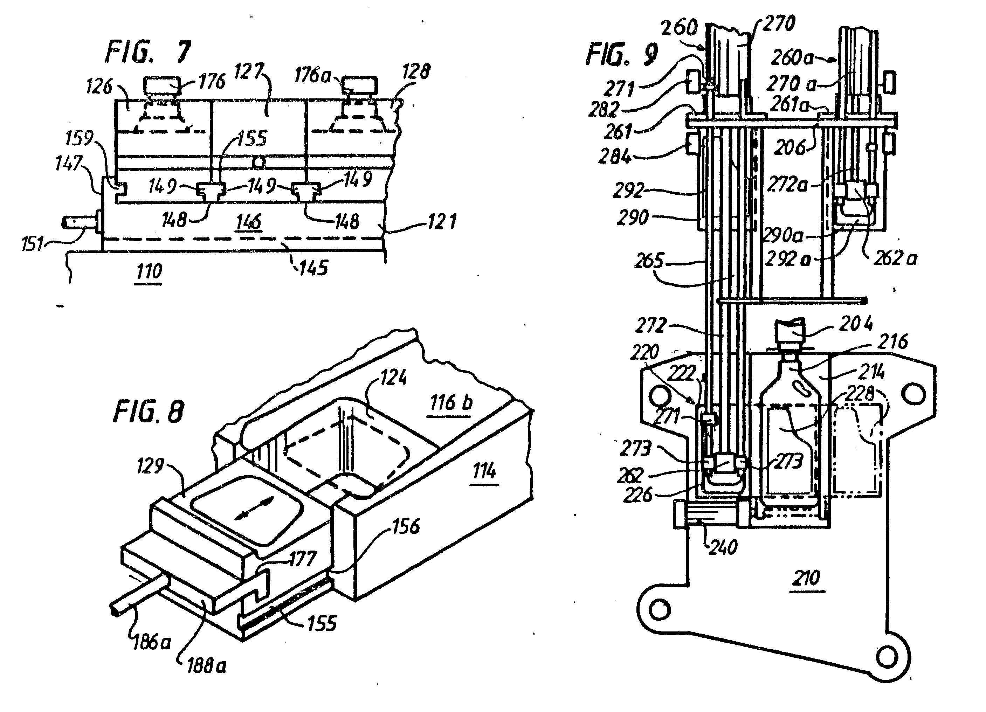

Bei den bevorzugten Ausführungsformen hat eine Blasformmaschine, für die diese Erfindung speziell anwendbar ist, ein Paar im Abstand befindlicher beweglicher Platten, die in den Zeichnungen mit 10, 110, 210 bezeichnet sind und auf welchen ein Paar korrespondierender Formteile 14, 14a, 114, 214 angebracht sind, die Formnester 16, 16a, 116 und 216 umschließen. Ein verschiebbares Formeinsatzsystem gleitet in einem Formteil und befindet sich zwischen dem Formnest und der Platte, mit Ausnahme eines Etikettenträgersegmentes, das so geformt ist, daß es mit einer Öffnung im Formnest übereinstimmt und während des Blasvorganges einen Teil der Form bildet. Das verschiebbare Formeinsatzsystem hat zwei oder mehr dieser Etikettenträgersegmente, so daß eines dieser Etikettenträgersegmente ein Etikett in das Formnest einbringen und während des Blasvorganges einen Teil des Formnestes bilden kann, während ein anderes Etikettenträgersegment zur gleichen Zeit mit einem Etikett versehen werden kann. Ein Satz von Etikettenführern und Etikettenmagazinen ist bei den Ausführungsformen der Fig. 1 bis 8 an der Platte 10, 110 und bei der Ausführungsform der Fig. 9 am Maschinenrahmen 206 angebracht, wobei die Etikettenführer dazu dienen, ein neues Etikett vom Etikettenmagazin auf ein Etikettenträgersegment aufzubringen, während das Segment sich außerhalb der Form befindet.

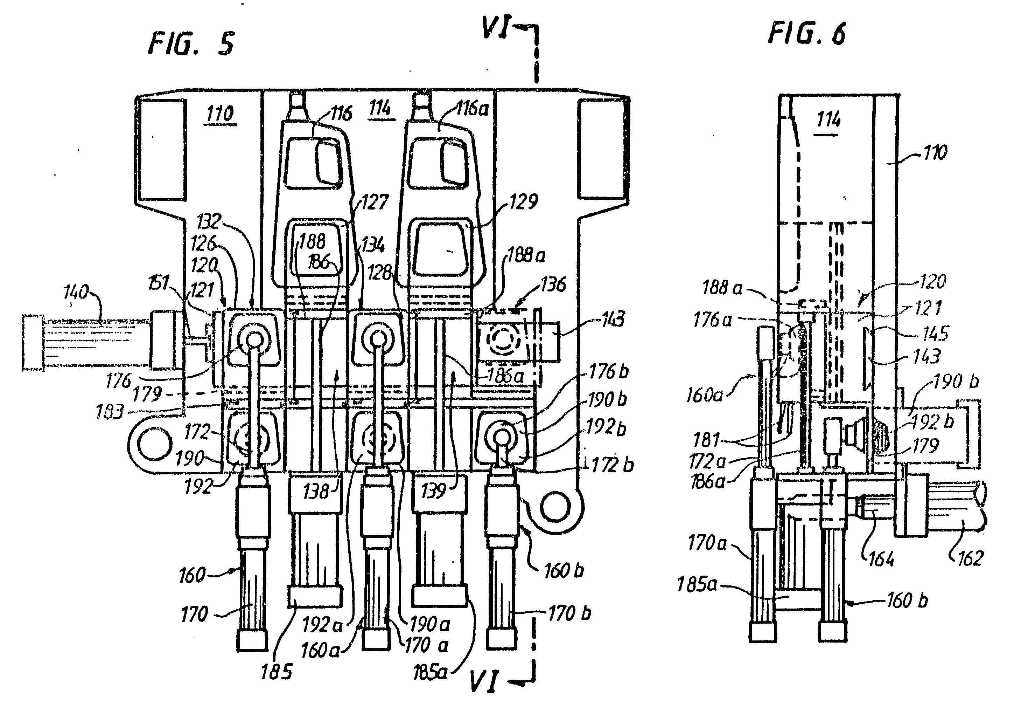

Bei der in den Fig. 1 bis 4 dargestellten Ausführungsform haben die Formteile 14, 14a ein Formnest 16, 16a und zwei Etikettenführer 60, 60a. Bei der Ausführungsform der Fig. 5 bis 8 trägt die Platte 110 ein Formteil 114 mit jeweils einem Paar Formnester 116, 116a. Ein Satz von drei Etikettenführern 160, 160a, 160b ist bei dieser Ausführungsform auf der Platte 110 montiert. Bei der Ausführungsform, die in Fig. 9 gezeigt ist, hat das Formteil 214 nur ein Formnest 216, während ein Paar von Etikettenführern 260, 260a in der Kalibrierstation stationär am Rahmen 206 der Blasformmaschine angebracht ist.

Wie die Fig. 1 und 2 zeigen, sind die Platten 10, 10a im wesentlichen eben und weisen einen Satz von Holmführungen 12 auf, die dazu dienen, die Platten 10, 10a verschiebbar mit der Blasmaschine zu verbinden, wie dem Fachmann wohlbekannt. Auf den Platten 10, 10a sind zusammenwirkende Formteile 14 und 14a befestigt, die sich voneinander weg und aufeinander zu bewegen, während die Platten 10, 10a auf den Holmen voneinander weg und aufeinander zu verschoben werden. Die Platten 10, 10a nehmen ein nicht dargestelltes Kühlsystem auf, einschließlich einer Anzahl von Kanälen und von Verbindungsschläuchen, die zu einem ähnlichen Kühlsystem in der Form führen. Das System kühlt die Form während des Blasvorganges. Solche Platten werden im allgemeinen in einer Mehrstationenblasformmaschine verwendet, in welcher sie von einer Station zu einer anderen innerhalb der Maschine bewegt werden. Beispielhaft ist die sog. Extrudierstation, in der die Form den Rohling aufnimmt und die Kalibrierstation, wo der Rohling geblasen wird.

Die Formteile 14, 14a berühren sich entlang einer Trennlinie 15 (Fig. 2), die eine Teilungsebene zwischen den Platten 10, 10a definiert. Jedes der Formteile 14, 14a schließt die Hälfte eines Formnestes 16, 16a ein, das so gestaltet ist, daß es der Form des gewünschten auszuformenden Gegenstandes entspricht.

Bei der in den Fig. 1 bis 4 gezeigten Ausführungsform wird eine Etikettenüberführungseinrichtung verwendet, mit einer Form, die Formteile 14 und 14a aufweist, und in der eine Einzelflasche innerhalb eines Arbeitszyklus der Blasformmaschine ausgeformt wird. Bei dieser Ausführungsform schließt ein verschiebbares Formeinsatzsystem 20 einen einzelnen, länglich rechteckigen Formeinsatz 22 ein, der in einer geradlinig verlaufenden Führung 24 gleitet, die an gegenüberliegenden Seiten des Formteiles 14 offen ist. Die Oberfläche des Formeinsatzes 22, die der Platte 10 abgewandt ist, weist zwei Etikettenträgersegmente 26 und 28 auf, auf denen jeweils ein Etikett aufgebracht werden kann.

Im Etikettierbereich 18 des Formnestes 16 ist eine Etikettenöffnung 30 vorgesehen, welche sich vom Formnest 16 in die Führung 24 erstreckt. Die Etikettenträgersegmente 26 und 28 sind abwechselnd vom Formnest 16 aus durch die Öffnung zugänglich, wenn sie mit dem Etikettenbereich 18, wie in Fig. 1 dargestellt, übereinstimmen. Wenn eines der Etikettenträgersegmente 26, 28 auf diese Weise hinter der Etikettenöffnung 30 plaziert ist, wirkt es mit dem Formteil 14 bei der Begrenzung des Formnestes zusammen. Der Formeinsatz 22 muß daher in dichter Anlage am Formteil 14 gehalten werden, um Leckstellen zu vermeiden. Wegen dieser dichten Anlage müssen die Etikettenträgersegmente 26 und 28 zumindest geringfügig in den Formeinsatz 22 versenkt sein, damit das auf dem Formeinsatz 22 angebrachte Etikett die Führung 24 passieren kann.

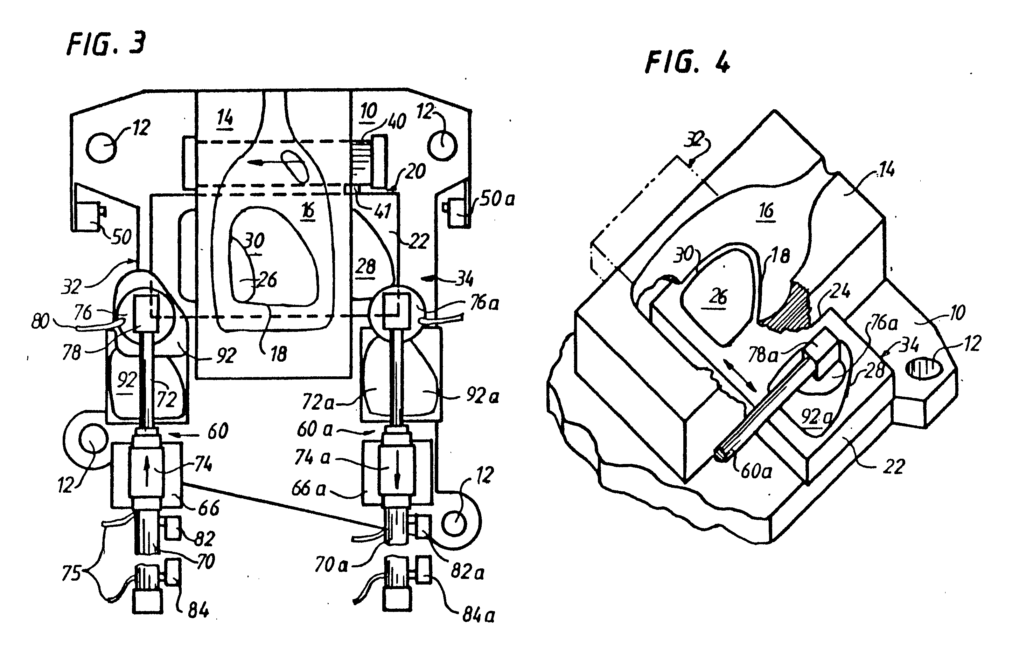

Beiderseits des Formteiles 14 neben der Öffnung der Führung 24 befindet sich je eine Etikettenstation 32, 34. Wenn eines der Etikettenträgersegmente 26, 28 sich innerhalb der Etikettenöffnung 30 befindet, befindet sich das andere Segment in einer der Etikettenstationen 32 oder 34 der Fig. 1, 4. Die Etikettenstationen 32 und 34 sind die Orte, an welchen ein Etikett 92, 92a auf die Etikettenträgersegmente 26, 28 aufgebracht wird.

Das Formeinsatzsystem 20 schließt einen doppelt wirkenden Verschiebezylinder 40 (Fig. 1, 3) ein, der sich parallel entlang einer Seite der Führung 24 erstreckt und innerhalb des Formteiles 14 zwischen dem Formnest 16 und der Platte 10 vorgesehen ist. Der Verschiebezylinder 40 ist mit dem Formeinsatz 22 durch einen Steg 41 verbunden, der den Formeinsatz 22 hin und her verschiebt, wenn der Zylinder in unterschiedlicher Richtung beaufschlagt wird. Der Steg 41 erstreckt sich durch die Seitenwand des Zylinders 40· hindurch und wird durch die Zylindermechanik unter der Wirkung entsprechend gesteuerter Flüssigkeiten verschoben, wie in der Technik allgemein bekannt. Der Steg 41 durchsetzt eine geschlitzte Gleitführung 42 (Fig. 2), die eine Gleitfläche darstellt, auf der der Formeinsatz 22 gleitet. Auf der gegenüberliegenden Seite des Formeinsatzes 22 befindet sich eine entsprechende Gleitführung 44.

Auf der Platte 10 angebracht und an der Außenseite jeder Etikettenstation 32, 34 befindet sich ein Schieberendschalter 50, 50a (Fig. 1, 3). Diese Schalter erfühlen die Stellung des Formeinsatzes 22 und steuern die Funktion der Etikettenführer 60, 60a. So zeigt das Auslösen des Schalters 50a an, daß das Etikettenträgersegment 26 sich innerhalb der Form in Position befindet und das Etikettenträgersegment 28 bereit ist, ein neues Etikett zu empfangen. Das Auslösen des Schalters 50 zeigt an, daß das Etikettenträgersegment 28 sich in der Form in Position befindet und das Etikettenträgersegment 26 bereit für den Empfang eines neuen Etiketts ist.

Innen im Formeinsatz 22 verlaufend befindet sich ein Netzwerk von Kanälen und Öffnungen 52 (Fig. 2) für einen Vakuumanschluß, die dazu dienen, das Etikett in richtiger Lage auf dem Etikettenträgersegment 26 zu halten. Ebenfalls innerhalb des Formeinsatzes 22 befindet sich ein Netzwerk von Kühlwasserkanälen 54, die dazu dienen, den Formeinsatz 22 während des Blasvorganges zu kühlen. Sowohl das Vakuumnetzwerk 52 als auch das Kühlnetzwerk 54 werden wie allgemein bekannt von Vakuum und Kühlwasserquellen (nicht dargestellt) versorgt, beispielsweise über bewegliche Schläuche oder dgl.

Seitlich und unterhalb des Formteiles 14 sind auf der Platte 10 bei den Etikettenstationen 32 und 34 Etikettenführer 60, 60a (Fig. 1, 3) angebracht. Nachdem die beiden Etikettenführer 60, 60a in allen wesentlichen Einzelheiten außer ihrer Anbringung übereinstimmen, wird nur der Etikettenführer 60 im einzelnen beschrieben, wobei gleiche Teile des Etikettenführers 60a gleiche Bezugszeichen mit dem Zusatz « a » haben.

Ein hydraulischer Abstandszylinder 62 (Fig. 2) ist die Platte 10 durchsetzend angebracht und besitzt eine verdrehungsfeste Kolbenstange 64, die sich von der Oberfläche der Platte 10, auf der das Formteil 14 montiert ist, weg erstreckt. Der Zylinder 62 ist auf der Platte 10 in konventioneller Weise, beispielsweise durch einen Befestigungsflansch 66, angebracht. Der Zylinder 62 ist ein doppelt wirkender Hydraulikzylinder, der die Kolbenstange 64 in beiden Richtungen aktivieren kann und wird von einer ventilgesteuerten Flüssigkeitsversorgung 67, wie in der Technik allgemein bekannt, gesteuert. Ein auf der Platte 10 angebrachter Endschalter 68 wird von einem einstellbaren Nocken 69 ausgelöst, wenn die Kolbenstange 64 voll zurückgezogen ist.

Starr auf dem vorstehenden freien Ende der Kolbenstange 64 ist ein Hydraulikzylinder 70 für die Überführung angebracht (Fig. 1 bis 3). Der Überführungszylinder 70 hat eine verdrehungsfeste Kolbenstange 72, die sich von der Kolbenstange 64 aus bis zur Etikettenstation 32 erstreckt. Der Überführungszylinder 70 ist auf der Kolbenstange 64 mittels eines Verbindungsteiles 74 befestigt, das von beliebiger konventioneller Ausführung sein kann. Der Überführungszylinder 70 ist ebenfalls ein doppelt wirkender Ölzylinder, der von einer ventilgesteuerten Flüssigkeitsversorgung 75 in herkömmlicher Weise gesteuert wird.

Starr auf dem vorstehenden freien Ende der Kolbenstange 72 ist ein flexibler Saugkopf 76 (Fig. 2) mittels eines Verbindungsstückes 78 befestigt. Das Verbindungsstück 78 kann den Saugkopf 76 in jeder konventionellen Art halten, wie beispielsweise durch eine Schraubverbindung mit dem freien Ende der Kolbenstange 72.

Der Saugkopf 76 steht durch eine flexible Vakuumleitung 80 mit einem äußeren (nicht dargestellten) Vakuumsystem in Verbindung, um in seinem tassenförmigen Teil ein Vakuum zu erzeugen. Dieses Vakuum ermöglicht es dem Saugkopf 76 Etiketten 92 einem Etikettenmagazin 90 zu entnehmen und sie festzuhalten. Auf dem Überführungszylinder 70 sind, wie in den Fig. 1 und 3 schematisch dargestellt, Endschalter 82 und 84 angebracht. Der Schalter 82 schaltet, wenn die Kolbenstange 72 voll ausgefahren ist. Der Schalter 84 schaltet, wenn die Kolbenstange 72 voll eingezogen ist. Die Endschalter 82 und 84 werden verwendet, um die Aktivierung des Abstandszylinders 62 für das Aufnehmen und Plazieren eines Etikettes zu steuern. Obwohl in der bevorzugten Ausführung die Kolbenstange 72 sich zwischen ihrer voll ausgefahrenen und zurückgezogenen Stellung bewegt, ist dem Fachmann klar, daß die Schalter 82, 84 auch verwendet werden können, um die Kolbenstange 72 zwischen ihren Endpositionen zu stoppen.

Zwischen dem Abstandszylinder 62 und der Etikettenstation 32 ist auf der Platte 10 das Etikettenmagazin 90 vorgesehen (Fig. 1 bis 3), das einen Vorrat von Etiketten 92 enthält und beispielsweise durch eine Befestigungsschelle 94 o. dgl. direkt auf der Platte 10 befestigt (Fig. 2) ist. Das Etikettenmagazin 90 hat ein offenes Ende 96, das von einem Halterand oder -lippe 98 umgeben ist, die die Etiketten 92 im Magazin 90 zurückhält. Das Magazin 90 weist eine Feder oder einen anderen Mechanismus auf, der die Etiketten an den Halterand 98 andrückt und so den fortlaufenden Zugang zu den Etiketten 92 durch das offene Ende 96 ermöglicht.

Wie Fig. 2 zeigt, erstreckt sich das Etikettenmagazin 90 durch die Platte 10 hindurch und enthält einen Vorratsstapel von Etiketten 92, der von der Rückseite der Platte 10 aus ergänzt werden kann. Alternativ kann ein Etikettenmagazin auch einen kontinuierlichen Etikettenstreifen zwischen der Platte 10 und dem Saugkopf 76 zuführen. Das Etikettenmagazin 90 fluchtet mit der Etikettenstation 32, so daß das offene Ende 96 genau gegenüber dem Saugkopf 76 liegt, wenn die Kolbenstange 72 voll zurückgezogen ist, um die Etiketten 92 zugänglich zu machen. Das Etikettenmagazin 90 ist auch so angeordnet, daß das nächstzugängliche Etikett 92 den gleichen Abstand zur Platte 10 hat wie das Etikettenträgersegment 26, so daß für den Abstandszylinder 62 nur eine zurückgezogene Position (Fig. 2) erforderlich ist.

Wie in Fig. 2 gestrichelt dargestellt, kann auf der gegenüberliegenden Platte 10a ein weiteres verschiebbares Formeinsatzsystem 20', ein Etikettenführer 60' und ein Etikettenvorratsmagazin 90' angebracht sein. Diese Einrichtungen werden verwendet, wenn gleichzeitig auf beide Seiten der zu formenden Flasche jeweils ein Etikett aufgebracht werden soll. Der Etikettenführer 60 bleibt zwischen der Trennlinie 15 und der Platte 10, auch wenn der Abstandszylinder 62 die Kolbenstange 64 voll ausfährt, so daß mehrere Etikettenführer an unterschiedlichen Platten einander nicht stören. Sollten solche Störungen auftreten, können die Öffnungen der Etikettenmagazine näher an die Platten 10 herangerückt, der Abstandszylinder 62 entsprechend gesteuert und die Formeinsätze 22 in entgegengesetzte Richtungen verschoben werden, so daß der Etikettenüberführungsvorgang gleichzeitig auf beiden Seiten der Form erfolgt.

Zum Verständnis der nachfolgend beschriebenen Funktionsweise der Vorrichtung nach den Fig. 1 bis 4 muß vorausgeschickt werden, daß der Druck an den Öffnungen 52 in den Etikettenträgersegmenten 26 und 28 negativer ist als an den Saugköpfen 76. Daher kann ein Etikett von dem Saugkopf auf das Etikettenträgersegment dadurch überführt werden, daß man einfach die beiden Komponenten gegenseitig annähert. Es ist dabei nicht erforderlich, das Vakuum im Saugkopf zu unterbrechen.

Die Etikettenüberführungseinrichtung nimmt zunächst die in Fig. 1 gezeigte Stellung ein, wobei der Etikettenführer 60 voll zurückgezogen und der Etikettenführer 60a voll ausgefahren ist. In dieser Stellung mit zurückgezogener Kolbenstange 64 ergreift der Saugkopf 76 ein Etikett 92 durch das offene Ende 96 des Magazins 90. Gleichzeitig wird das vorher entnommene Etikett 92a, das vom Saugkopf 76a gehalten wird, aufgrund des negativeren Druckes der Öffnungen 52 vom Etikettenträgersegment 28 festgehalten. Die Zylinder 62 werden dann ausgefahren unter Zurücklassung eines Etikettes 92a in der richtigen Lage auf dem Etikettenträgersegment 28, wobei der Saugkopf 76a leer ist und ein Etikett sich am Saugkopf 76 befindet.

Gleichzeitig mit den vorbeschriebenen Vorgängen kann gegebenenfalls der im Formnest 16, 16a befindliche Rohling aufgeblasen werden. Nachdem das Etikettenträgersegment 26, auf das während der vorausgegangenen Folge von Arbeitsabläufen ein Etikett aufgebracht wurde, sich in der Stellung befindet, in der es einen Teil des Formnestes bildet, wird der resultierende Behälter an einer oder beiden Seiten mit einem korrekt angebrachten Etikett versehen.

Nach dem Öffnen der Formteile wird der Behälter auf irgendeine bekannte Weise entnommen. Sobald diese Entnahme beendet ist, wird der Zylinder 40 beaufschlagt verschiebt das Etikettenträgersegment 28 und das von ihm gehaltene Etikett in die Form und das Etikettenträgersegment 26 aus der Form heraus wie in Fig. 1 gestrichelt dargestellt, wo es den Endschalter 50 auslöst. Das sich daraus ergebende Signal bewirkt das Ausfahren der Kolbenstange 72 aus dem Zylinder 70 und das Zurückziehen der Kolbenstange 72a in den Zylinder 70a. Wenn die gewünschten Positionen erreicht sind, d. h. wenn der Saugkopf 76 sich horizontal gegenüber dem Etikettenträgersegment 26 und der Saugkopf 76a sich horizontal gegenüber dem nächsten Etikett 92a im Magazin 90 befindet, schalten die Endschalter 82 und 84a und bewirken damit das Zurückfahren der Zylinder 62. Dieses Zurückziehen bewirkt, daß das Etikett 92, das zuvor dem Magazin 90 entnommen war, von dem Etikettenträgersegment 26 festgehalten wird und das vorderste Etikett 92a im Magazin 90a vom Saugkopf 76a aufgenommen wird. Die Zylinder 62 werden dann ausgefahren, wobei ein Etikett auf dem Etikettenträgersegment 26 zurückbleibt und ein Etikett übergabebereit für den nächsten Takt am Saugkopf 76a haftet.

Währenddessen, davor oder danach bewegen die Platten 10 die Formteile 14 in die Extrudierstation, schließen sie um einen Rohling und überführen sie in die Kalibrierstation. Nachdem das Blasen eines Behälters beendet ist, wobei das Etikettenträgersegment 28 einen Teil des Formnestes bildet, wird der Vorgang wiederholt.

Die Ausführungsform der Vorrichtung der Fig. 1 bis 4 kann auch für eine Form mit mehreren Formnestern 16 verwendet werden. Bei dieser Anwendung ist der Formeinsatz 22 verlängert, um zusätzliche Etikettenträgersegmente vorzusehen, und zusätzliche Etikettenführer ·und Etikettenmagazine sind an jeder Seite des Formteiles 14 vorgesehen, um Etiketten auf den zusätzlichen Etikettenträgersegmenten aufzubringen. Zusätzlich können die Platten auch mehr als ein Formteil tragen mit einem einzigen gemeinsamen verlängerten Formeinsatz, der in alle Formteile durchsetzenden Führungen gleitet.

Bei einer zweiten in den Fig. 5 bis 8 dargestellten Ausführungsform wird eine Etikettenüberführungseinrichtung dazu verwendet, Etiketten gleichzeitig auf zwei Etikettenträgersegmente auf einem verschiebbaren Formeinsatzsystem aufzubringen. Diese Etikettenüberführungseinrichtung wird in Verbindung mit Formen, die zwei Formnester 116, 116a (Fig. 5) zur gleichzeitigen Ausformung von zwei Flaschen aufweisen verwendet, wobei den bezüglich der Figuren 1-4 beschriebenen Teilen gleiche oder entsprechende Teile mit um einhundert erhöhten, in den Endziffern gleichen Bezugszeichen versehen sind.

Das verschiebbare Formeinsatzsystem 120 der Fig. 5 bis 7 hat einen verschiebbaren Träger 121, der vier getrennte Etikettenträgersegmente 126, 127, 128, 129 aufnimmt. Jedes Segment bildet, nachdem es mit einem anhaftenden Etikett in ein Formnest eingebracht ist, während der folgenden Blasverformung einen Teil des Formnestes.

Die Etikettenüberführungseinrichtung schließt auch einen Satz von drei Etikettenführern 160, 160a und 160b (Fig. 5) ein. Diese Etikettenführer sind grundsätzlich identisch mit dem in Verbindung mit der Ausführungsform der Fig. 1 bis 4 beschriebenen. Jeder schließt einen auf der Platte befestigten Abstandszylinder 162 ein, dessen Kolbenstange 164 einen Überführungszylinder 170, 170a, 170b trägt. Die Kolbenstangen 172, 172a, 172b der Überführungszylinder 170, 170a, 170b tragen Saugköpfe 176, 176a, 176b, alles wie vorbeschrieben.

Die Etikettenführer 160, 160a, 160b sind so angebracht, daß sie sich nach oben in Richtung von drei in einer Reihe liegenden Etikettenstationen 132, 134 und 136 erstrecken, die sich unterhalb des Formteiles 114 befinden·und in Linie mit dem verschiebbaren Träger 121 (Fig. 5). Die Etikettenstationen 132, 134, 136 haben ausreichende Abstände voneinander, die das Einführen eines Etikettenträgersegmentes 126, 127, 128, 129 in jeden der sich ergebenden beiden Zwischenräume ermöglichen, welche Zwischenräume im folgenden als Formeinschubstationen 138 und 139 (Fig. 5) bezeichnet sind. Die Formeinschubstationen 138 und 139 fluchten jeweils mit einer Führung 124 im Unterteil des Formteiles 114 zu dem jeweiligen Formnest 116, 116a (Fig. 5, 8). Die Formeinschubstationen 138 und 139 sind die Orte, von welchen getrennte Etikettenträgersegmente von dem verschiebbaren Träger 121 heraus in die Formnester 116, 116a eingeschoben werden. Die Etikettenstationen 132 und 136 befinden sich unterhalb und an den Außenseiten der Formnester 116, 116a. Die Etikettenstation 134 befindet sich unterhalb und zwischen den Formnestern 116, 116a. Die Formeinschubstationen befinden sich zwischen diesen Etikettenstationen.

Unterhalb und hinter jeder Etikettenstation 132, 134, 136 ist ein Etikettenmagazin 190, 190a, 190b der in Verbindung mit den Fig. 1 bis 4 beschriebenen Art angebracht. Die Etikettenmagazine 190, 190a, 190b sind so angebracht, daß Saugköpfe 176, 176a, 176b ein zugängliches Etikett berühren, wenn die hydraulischen Überführungszylinder 170, 170a, 170b und die Abstandszylinder 162 voll zurückgezogen sind (Fig. 6). Dies ermöglicht den Saugköpfen 176, 176a, 176b den Zugang zu den Vorratsmagazinen 190, 190a, 190b und das Aufnehmen von Etiketten 192, 192a, 192b.

Der verschiebbare Träger 121 (Fig. 5, 7) weist eine länglich rechteckige Rückseite 146 auf, von deren Ende Seitenleisten 147 ausgehen. An der Rückseite 146 sind drei T-förmige Schieberführungen 148 (Fig. 7) befestigt, die sich parallel zu den Seitenleisten 147 erstrecken und ein Paar seitlicher Vorsprünge 149 aufweisen, die im Abstand zur Rückseite 146 verlaufen. Ein weiterer seitlicher Vorsprung 159 verläuft auch entlang jeder Seitenleiste 147, um zusammen mit den Führungen 148 die Etikettenträgersegmente 126, 127, 128, 129 verschiebbar im Träger 121 aufzunehmen, dabei jedoch ihr Einschieben in die Formnester 116, 116a zu ermöglichen. Der verschiebbare Träger 121 wird mittels eines Verschiebezylinders 140 (Fig. 5) hin- und herverschoben, der auf der Platte 110 befestigt ist. Seine Kolbenstange 151 ist mit einer Seitenleiste 146 des verschiebbaren Trägers 121 verbunden (Fig. 5, 7). Der Verschiebezylinder 140 ist ein doppelt wirkender Ölzylinder, der in konventioneller Weise durch eine hydraulische Flüssigkeitsversorgung gesteuert wird. Der Träger 121 wird verschiebbar von einer Schwalbenschwanzführung 143 gehalten, die an der Platte 110 befestigt ist. Der Träger 121 hat eine entsprechende Nut 145 entlang seiner Rückseite, die die Schwalbenschwanzführung 143 aufnimmt.

Wie die Fig. 7 und 8 zeigen, weisen die Etikettenträgersegmente 126, 127, 128, 129 Führungsnuten 155 auf, die sich entlang beider Seiten erstrecken und mit den seitlichen Vorsprüngen 149 auf dem verschiebbaren Träger 121 zusammenwirken. Die Vorsprünge 149 werden wahlweise in Übereinstimmung mit seitlichen Vorsprüngen 156 (Fig. 8) in den Formnestern 116, 116a gebracht, wenn der Zylinder 140 betätigt wird und erlauben so das Einschieben nach oben eines bestimmten Etikettenträgersegmentes vom verschiebbaren Träger 121 in das Formnest, um einen Teil desselben zu bilden.

Entlang der Unterseite jedes Etikettenträgersegmentes 126, 127, 128, 129 erstreckt sich eine L-förmige Nut 177 (Fig. 8), die der Bewegung der Segmente 126, 127, 128, 129 in die Formnester 116, 116a dient. Die Nut 177 erstreckt sich durch die Segmente hindurch, so daß ein Kuppelstück der Verschiebeeinrichtung für die Etikettenträgersegmente von einem Segment in ein anderes gleiten kann, wenn der verschiebbare Träger 121 hin- und herbewegt wird. Direkt unterhalb jeder Etikettenstation 132, 134, 136 und in Anlage am verschiebbaren Träger 121 ist eine Leiste oder Rippe 179, die sich beispielsweise von der Platte 110 aus erstreckt, um die Etikettenträgersegmente 126, 127, 128, 129 daran zu hindern, in den Etikettenstationen aus dem verschiebbaren Träger 121 herauszufallen. Die Etikettenträgersegmente weisen ein inneres Netzwerk von Kühlkanälen auf, durch die ein Kühlmittel zirkuliert, und enthalten auch ein Netzwerk von Vakuumöffnungen, die verwendet werden, Etiketten auf der Trägerfläche der Segmente festzuhalten. Diese Netzwerke der Vakuum- und Kühlkanäle werden über bewegliche Leitungen 181 versorgt, die durch Winkelflansche 183 gleiten, um nicht an den Etikettenstationen 132, 134, 136 oder den Etikettenmagazinen 190, 190a, 190b hängenzubleiben.

Ein Paar hydraulischer Einschubzylinder 185, 185a (Fig. 5) sind auf der Platte 110 zwischen den Etikettenführern 160, 160a, 160b befestigt. Die Einschubzylinder 185, 185a werden als Vorschub zum Einführen und Zurückziehen der Etikettenträgersegmente 126, 127, 128, 129 in und aus den Führungen 124 verwendet. Die Zylinder 185, 185a haben jeweils eine Kolbenstange 186, 186a, die sich parallel zu den T-förmigen Schieberführungen 148 am Träger 121 erstreckt und einen L-förmigen Kupplungskopf 188, 188a (Fig. 6, 8) besitzt, der so geformt ist, daß er in die Nut 177 der Etikettenträgersegmente paßt. Wie in Fig. 8 dargestellt, befindet sich der Kupplungskopf 188a in der Nut 177. Die Etikettenträgersegmente gleiten auf den Kupplungsköpfen 188, 188a hin und her.

Angenommen, daß zu Beginn des Vorganges der verschiebbare Träger 121 sich in der in Fig. 5 dargestellten Stellung befindet, und daß die Etikettenträgersegmente 127, 129, die vorher mit einem Etikett versehen wurden, nach oben geschoben szind, um einen Teil der Formnester 116, 116a zu bilden, werden die Etikettenführer 160, 160a, die ein Etikett auf diese Etikettenträgersegmente 127 und 129 aufgebracht haben, zunächst unterhalb und zwischen die Form zurückgezogen, so daß jeder die Stellung einnimmt, in der der Etikettenführer 160b in Fig. 6 dargestellt ist. Dieser Schritt ist natürlich nur erforderlich, wenn der nicht dargestellte zugehörige Formteil auch mit einem Etikettiersystem der gezeigten Art versehen ist, so daß die Flaschen auf beiden Seiten etikettiert werden. Sollte dies nicht der Fall sein, ist genügend Zwischenraum vorhanden, um die Etikettenführer 160 und 160a in ihre Aufnahmeposition bezüglich der Etikettenmagazine zurückzuziehen, nachdem die Form geschlossen wurde und der Blasvorgang abläuft. Auf jeden Fall ist der nächste Schritt das Schließen der Form um die Rohlinge, der Übergang in die Kalibrierstation und das Blasen des Behälters.

Wenn die Behälter geblasen sind, haftet das durch Vakuum auf den Etikettenträgersegmenten 127 und 129 festgehaltene Etikett unlösbar auf dem Behälter. Nachdem das Blasen beendet ist, wird die Form geöffnet und die fertigen Behälter in irgend einer konventionellen Weise entnommen.

Als nächstes werden die Zylinder 185, 185a zurückgezogen und nehmen die jetzt leeren Etikettenträgersegmente 127 und 129 mit zurück in Reihe mit den Segmenten 126 und 128 im Träger 121. Daraufhin wird der Zylinder 140 ausgefahren und schiebt den Träger 121 bei der Ansicht gemäß Fig. 5 nach rechts. Während dieser Bewegung ermöglichen es die L-förmigen Nuten 177 entlang der Unterseiten der Segmente 127 und 129, daß diese Segmente außer Eingriff mit den L-förmigen Kupplungsköpfen 188, 188a gleiten, während die Segmente 126 und 128 mit ihnen in Eingriff geschoben werden.

Wenn der Verschiebezylinder 140 seinen Vorschubhub beendet hat, befinden sich die Etikettenträgersegmente 126 und 128 unterhalb der Formnester und in Bereitschaft, mit anhaftendem Etikett durch die Einschubzylinder 185, 185a nach oben verschoben zu werden. Die Segmente 127 und 129 befinden sich nun bei den Etikettenstationen 134 und 136. Die Etikettenführer 160a und 160b werden betätigt, um in der vorbeschriebenen Weise Etiketten aufzubringen.

Die Etikettenträgersegmente 126 und 128 werden nach oben in die Formnester 116, 116a geschoben. Die Formteile werden durch die Platten in die Extrudierstation gebracht und die Formen um die Rohlinge geschlossen, sobald der erforderliche Zwischenraum für die Etikettenführer 160a und 160b erreicht ist. Es ist anzumerken, daß viele, wenn nicht alle der Vorgänge der Verschiebung des Einsatzes, des Einschiebens der Segmente und des Aufbringens der Etiketten während des Zeitraumes erfolgen können, in dem die Platten von der Kalibrierstation zur Extrudierstation gebracht werden.

Wenn die Formteile um die Rohlinge geschlossen sind, werden die Formen wieder in die Kalibrierstation gebracht und die Rohlinge geblasen. Die resultierenden Behälter sind dann mit den in den Formnestern 116, 166a durch die Formträgersegmente 126 und 128 gehaltenen Etiketten versehen. Wenn die Formteile sich öffnen und die Behälter entnommen werden, fahren die Zylinder 185, 185a zurück und führen die Segmente 126 und 128 in den verschiebbaren Träger 121 zurück. Der Zylinder 140 wird dann wieder zurückgezogen und bringt die Etikettenträgersegmente 127 und 129 in Übereinstimmung mit den Formnestern 116, 116a. Diese Segmente werden in die Formnester hineingeschoben und auf die Segmente 126 und 128 Etiketten aufgebracht und der vorbeschriebene Vorgang kontinuierlich wiederholt.

Eine weitere Ausführungsform der Etikettenüberführungseinrichtung ist in Fig. 9 gezeigt, wobei wieder gleiche Endziffern für bereits beschriebene, oder diesen vergleichbare Teile verwendet wurden, aber hier um zweihundert erhöht. Diese Etikettenüberführungseinrichtung ist im wesentlichen gleich der in den Fig. 1 bis 4 gezeigten, mit der Ausnahme, daß die Etikettführer 260 und 260a nicht auf der Platte 210, sondern vielmehr am Rahmen der Blasformmaschine in der Kalibrierstation befestigt sind. Diese Ausführungsform ist besonders geeignet zur Überführung langer oder großer Etiketten, die Etikettenvorratsmagazine 290 und 290a erfordern, die zu groß sind, um auf der Platte 210 unterhalb der Formteile angebracht zu werden.

Wie in Fig. 9 gezeigt, schließt die Etikettenüberführungseinrichtung zwei im Abstand angeordnete Etikettenführer 260 und 260a ein, die mit einem Paar von Flanschen 261, 261a auf einem Rahmen 206 montiert sind, der auch dazu dient, den Blasdorn 204 der Maschine zu tragen. Hydraulische Überführungszylinder 270, 270a weisen lange Kolbenstangen 272, 272a auf, die sich nach unten in Richtung auf die Platte 210 erstrecken, wenn diese in der Kalibrierstation ist. Die Kolbenstange 272 ist an ihrem freien Ende mit einem Abstandszylinder 262 versehen und außerdem mit einem Paar im Abstand gehaltener langer Führungsstangen 265, die an gegenüberliegenden Seiten des Zylinders 262 durch ein Paar von Schellen 273 gehalten werden. Jeder Abstandszylinder 262, 262a ist ein kleiner, doppelt wirkender Hydraulikzylinder mit einer Kolbenstange, die einen Saugkopf der vorbeschriebenen Art entweder gegen ein Etikettenmagazin 290, 290a oder ein Etikettenträgersegment 226, 228 verschiebt, je nachdem welchem dieser Elemente der Zylinder während seines Ausfahrens am nächsten ist. Die Führungsstangen 265 verlaufen parallel zur Kolbenstange 272 und durchsetzen den Rahmen 206, um eine zusätzliche Führung für die ausgefahrene Kolbenstange 272 zu bilden.

An der äußeren Führungsstange 265 befindet sich ein Paar einstellbarer Nocken 271, die Endschalter 282, 284 betätigen zur Steuerung der Maschine in den völlig eingezogenen oder ausgefahrenen Stellungen. Unterhalb des Rahmens 206 befinden sich ein Paar langgestreckter Etikettenmagazine 290, 290a der vorbeschriebenen Art mit der Ausnahme, daß die Etikettenmagazine 290, 290a längere Etiketten 292, 292a bevorraten. Auf der Platte 210 ist ein Formteil 214 angebracht mit einem Formnest 216 und einem Formeinsatz 222, wie in Fig. 1 bis 4 beschrieben, mit der Ausnahme, daß der Formeinsatz 222 des verschiebbaren Formeinsatzsystems 220 größer ist, um die längeren Etiketten 292, 292a aufnehmen zu können. Der Formeinsatz 222 wird durch einen Verschiebezylinder 240 bewegt, der auf einer Seite des Formteiles 214 angebracht ist.

Die Etikettenüberführungseinrichtung der Fig. 9 wird verwendet um größere Etiketten 292, 292a auf dem Formeinsatz 222 anzubringen, in der gleichen Weise wie vorher bezüglich der Ausführungsform der Fig. 1 bis 4 beschrieben. Der einzige Unterschied ist, daß die Etikettenführer 260, 260a die Etiketten 292, 292a von einer stationären Halterung am Rahmen der Blasformmaschine oberhalb der Platte 210 aus bewegen, und daß daher die Platte 210 während des Etikettenüberführungsvorganges stationär in der Kalibrierstation bleiben muß, und daß die Abstandszylinder 262, 262a die Etiketten in Richtung auf den Formeinsatz 222 bewegen, anstelle einer Bewegung der gesamten Etikettenführer 260, 260a.

Es ist darauf hinzuweisen, daß das vorstehende nur eine Beschreibung der bevorzugten Ausführungsformen ist, und daß verschiedene Modifizierungen oder Verbesserungen, wie z. B. die Verwendung von pneumatischen und/oder hydraulischen Zylindern anstelle nur hydraulischer Zylinder oder das Einbringen anderer Einlegeteile in die Formnester anstelle der Etiketten von einem Fachmann vorgenommen werden können ohne den allgemeinen, geoffenbarten Erfindungsgedanken zu verlassen. Der angestrebte Schutz ergibt sich aus den Ansprüchen und deren weitester nach dem Gesetz möglicher Auslegung, wobei in den Ansprüchen, soweit dies das Verständnis nicht beeinträchtigt, die Bezugzeichen nur einfach, d. h. ohne die bei mehrfachem Vorhandensein gleicher Teile verwendeten Zusätze wie « a », « b » usw. verwendet werden.

Bezugzeichenaufstellung

Figuren 1-4
10, 10a   Platte
12   Holmführung
14, 14a   Formteile
15   Trennlinie
16, 16a   Formnest
18   Etikettierbereich
20, 20'   verschiebbares Formeinsatzsystem
22   Formeinsatz
24   Führung
26, 28   Etikettenträgersegment
30   Etikettenöffnung
32, 34   Etikettenstation
40   doppeltwirkender Verschiebezylinder
41   Steg
42   geschlitze Gleitführung

44   Gleitführung
50, 50a   Schieberendschalter
52   Netzwerk von Kanälen und Öffnungen
54   Netzwerk von Kühlwasserkanälen
60, 60a, 60'   Etikettenführer
62   Abstandszylinder
64   verdrehungsfeste Kolbenstange von 62
66, 66a   Befestigungsflansch für 62
67   ventilgesteuerte Flüssigkeitsversorgung
68   Endschalter
69   einstellbarer Nocken
70, 70a   Hydraulikzylinder für die Überführung = Überführungszylinder
72, 72a   verdrehungsfeste Kolbenstange von 70
74, 74a   Verbindungsteil
75, 75a   ventilgesteuerte Flüssigkeitsversorgung
76, 76a   Saugkopf
78, 78a   Verbindungsstück
80, 80a   flexible Vakuumleitung
82, 82a, 84, 84a   Endschalter
90, 90a, 90'   Etikettenmagazin
92, 92a   Etiketten
94   Befestigungsschelle
96   offenes Ende von 90
98   Halterand oder -lippe

Figuren 6-8
110   Platte
114   Formteil
116, 116a   Formnest
120   verschiebbares Formeinsatzsystem
121   verschiebbarer Träger
124   Führung
126, 127, 128, 129   Etikettenträgersegment
132, 134, 136   Etikettenstation
138, 139   Formeinschubstation
140   Verschiebezylinder
143   Schwalbenschwanzführung
145   Nut für 143
146   Rückseite von 121
147   Seitenleisten
148   T-förmige Schieberführungen
149   seitlicher Vorsprung
151   Kolbenstange von 140
155   Führungsnuten
156   seitliche Vorsprünge in 116
159   seitlicher Vorsprung an 147
160, 160a, 160b   Etikettenführer
162   Abstandszylinder
164   Kolbenstange von 162
170, 170a, 170b   Überführungszylinder
172, 172a, 172b   Kolbenstange von 170, 170a, 170b
176, 176a, 176b   Saugkopf
177   L-förmige Nut
179   Leiste oder Rippe
181   flexible Leitungen
183   Winkelflansch
185, 185a   hydraulischer Einschubzylinder
186, 186a   Kolbenstange von 185, 185a
188, 188a   L-förmiger Kupplungskopf
190, 190a, 190b   Etikettenmagazin
192, 192a, 192b   Etiketten

Figur 9
204   Blasdorn
206   Maschinenrahmen

210   Platte
214   Formteil
216   Formnest
220   verschiebbares Formeinsatzsystem
222   Formeinsatz
226   Etikettenträgersegment
228   Etikettenträgersegment
240   Verschiebezylinder
260, 260a   Etikettenführer
261, 261a   Flansch
262, 262a   Abstandszylinder
265   Führungsstangen
270, 270a   Überführungszylinder
271   einstellbarer Nocken
272, 272a   Kolbenstange von 270
273   Schellen
282   Endschalter
284   Endschalter
290, 290a   Etikettenmagazin
292, 292a   Etiketten

## Patentansprüche

1. Einrichtung zum Einbringen von Etiketten und anderen Einlegeteilen für Behälterblasformmaschinen mit trennbaren Formteilen (14, 114, 214), die ein Formnest (16, 116, 216) umschließen und auf einem Paar im Abstand befindlicher beweglicher Platten (10, 110, 210) angebracht sind, mit einem verschiebbaren Formeinsatz (20, 120, 220) für die Etiketten (92, 192, 292), der so in das Formnest (14, 114, 214) einschiebbar ist, daß er das Formnest schließt und einen Teil der inneren Oberfläche des Formnestes (16, 116, 216) bildet, und der wieder aus dem Formteil heraus in eine Etikettenstation (32, 34, 132, 134, 136) bringbar ist, wo er mit einem Etikett versehbar ist, mit Einrichtungen für die Aufnahme und das Festhalten eines Etikettes (92, 192, 292) und seine Zugänglichmachung vom Inneren des Formnestes (16, 116, 216) aus, wenn der Formeinsatz sich im Formteil befindet, und mit einer Einrichtung (40, 140, 240 ; 185) zum Verschieben des Formeinsatzes (20, 120, 220) zwischen der Position im Formteil und der Etikettenaufnahmestation, dadurch gekennzeichnet, daß der Formeinsatz ein Formeinsatzsystem (20, 120, 220) mit wenigstens zwei Etikettenträgersegmenten (26, 28, 126, 127, 128, 129, 226, 228) für die Etiketten ist, die von der Einrichtung (40, 140, 240 ; 185) abwechselnd zwischen der Position im Formteil und zugehörigen Etikettenaufnahmestationen (32, 34, 132, 134, 136) verschiebbar sind, und daß Etikettenführer (60, 160, 260) für die Überführung eines Etikettes auf jedes der Etikettenträgersegmente von einem Etikettenvorrat in einem Etikettenmagazin (90, 190, 290), wenn das betreffende Segment sich in der zugehörigen Etikettenstation (32, 34, 132, 134, 136) befindet, angeordnet sind.

2. Vorrichtung nach Anspruch 1, gekennzeichnet durch eine zwei miteinander fluchtende Zugangsöffnungen verbindende Führung (24) im Formteil (14, 214), die mit dem genannten Formnest (16, 216) in Verbindung steht, wobei das Formeinsatzsystem (20, 220) einen einteiligen Formeinsatz (22, 222) einschließt, auf dem sich die Etikettenträgersegmente (26, 28, 226, 228) befinden und abwechselnd erst aus einer der Zugangsöffnungen und dann aus der anderen hinein- und herausschiebbar sind, und außerdem dadurch, daß je einer der Etikettenführer (60, 60a ; 260, 260a) außerhalb des Formteiles (14, 214) in der Nähe jeder der genannten Öffnungen angebracht ist.

3. Vorrichtung nach Anspruch 1, dadurch gekennzeichnet, daß die Platten (10, 110) zwischen verschiedenen Stationen innerhalb der Maschine bewegbar sind, und daß die Etikettenführer (60, 160) an den Platten (10, 110) befestigt sind und so ihrer Bewegung zwischen den Stationen folgen.

4. Vorrichtung nach Anspruch 2, dadurch gekennzeichnet, daß die Etikettenführer (260, 260a) und die Etikettenmagazine (290, 290a) stationär am Rahmen (206) der Blasformmaschine oberhalb der Platten (210) angebracht sind.

5. Vorrichtung nach Anspruch 1, dadurch gekennzeichnet, daß die Formteile (114) wenigstens zwei Formnester (116, 116a) begrenzen, wobei jedes Formnest (116, 116a) eine Zugangsöffnung zu seinem Inneren aufweist, und wobei wenigstens vier der Etikettenträgersegmente (126, 127, 128, 129) vorhanden sind, und wobei die Verschiebeeinrichtungen (140, 185) des Formeinsatzsystems (120) wenigstens zwei der genannten Segmente (z. B. 127, 129 Fig. 5) durch die Zugangsöffnungen in die Formnester (116, 116a) und wenigstens zwei Segmente (z. B. 126, 128) in eine Etikettenstation (132, 134, 136) verschieben.

6. Vorrichtung nach Anspruch 5, dadurch gekennzeichnet, daß einer der Etikettenführer (160, 160a, 160b) sich bei jedem der genannten Segmente (126, 127, 128, 129) befindet, wenn es in der Etikettenstation (132, 134, 136) ist.

7. Vorrichtung nach Anspruch 6, gekennzeichnet durch wenigstens eine erste, zweite und dritte Etikettenstation (132, 134, 136) und wenigstens eine erste und eine zweite Formeinschubstation (138, 139) abwechselnd zwischen den Etikettenstationen (132, 134 bzw. 134, 136), und dadurch, daß die Verschiebeeinrichtungen (140) die genannten vier Etikettenträgersegmente (126, 127, 128, 129) hin- und herbewegt, zwischen einer ersten Stellung, wo sie sich in der ersten und zweiten Etikettenstation (132, 134) und in der ersten und zweiten Formeinschubstation (138, 139) befinden und einer zweiten Stellung, wo die genannten Segmente die zweite und dritte Etikettenstation (134, 136) und wiederum die genannte erste und zweite Formeinschubstation (138, 139) einnehmen, wobei die genannten Verschiebeeinrichtungen Einschubzylinder (185, 185a) aufweisen, um die Segmente, die die erste und zweite Formeinschubstation einnehmen, in die Formnester (116, 116a) zu verschieben.

8. Vorrichtung nach Anspruch 5, dadurch gekennzeichnet, daß die Verschiebeeinrichtungen einen Verschiebezylinder (140) für das abwechselnde Verschieben der genannten Segmente zwischen drei fluchtenden Etikettenstationen (132, 134, 136) und zwei Formeinschubstationen (138, 139) einschließt, wobei jede der genannten Formeinschubstationen zwischen zwei Etikettenstationen vorgesehen ist und darüberhinaus drei Etikettenführer (160, 160a, 160b) so angeordnet sind, daß jeder ein Segment, das sich in einer der genannten Etikettenstationen befindet, beschicken kann.

9. Vorrichtung nach Anspruch 1, dadurch gekennzeichnet, daß die Etikettenträgersegmente (126, 127, 128, 129) jeweils getrennte Segmente sind, die verschiebbar und entfernbar in einem Träger (121) vorgesehen sind, und außerdem, daß ein Verschiebezylinder (140) für die Hin- und Herbewegung der Segmente im Träger von der Etikettenstation (132, 134, 136) zu einer der Formeinschubstationen (138, 139) vorgesehen ist, von welcher aus die Segmente in die Formnester (116, 116a) verschoben werden können.

10. Vorrichtung nach Anspruch 9, dadurch gekennzeichnet, daß der verschiebbare Träger (121) auf einer Führung (143) beweglich ist, wobei die genannten Segmente (126, 127, 128, 129) wahlweise herausschiebbar auf dem Träger angebracht sind und der Träger Einrichtungen (140) aufweist, um ihn auf der genannten Führung zu bewegen, um die genannten Segmente hin und her zwischen den genannten Etiketten- und Formeinschubstationen zu verschieben und Einrichtungen (185, 185a) vorgesehen sind für das Bewegen der Segmente in den Formeinschubstationen (138, 139) aus dem genannten Träger heraus in die Formnester (116, 116a).

11. Vorrichtung nach Anspruch 9, dadurch gekennzeichnet, daß das Formteil (114) wenigstens zwei Formnester (116, 116a) einschließt, und der Träger (121) wenigstens vier der einzelnen Segmente (126, 127, 128, 129) aufnimmt, wobei die Etiketten- und Formeinschubstationen (132, 138, 134, 139, 136) abwechselnd entlang der genannten Führung (143) vorgesehen sind, unter Ausrichtung der Formeinschubstationen (138, 139) mit den Formnestern (116, 116a) und die Etikettenstationen (132, 134, 136) zu den Formnestern versetzt sind.

12. Vorrichtung nach Anspruch 11, gekennzeichnet durch drei Etikettenführer (160, 160a, 160b) und zwei Einschubzylinder (185, 185a) für die Bewegung der Segmente von der Formeinschubstation in die Formnester, wobei die Einschubzylinder (155, 155a) jeweils zwischen zwei der Etikettenführer (160, 160a bzw. 160a, 160b) angeordnet sind.

13. Vorrichtung nach Anspruch 1, wobei die Segmente (26, 28) in ein erstes der trennbaren Formteile (14) einschiebbar sind, gekennzeichnet durch eine zweite Etikettenüberführungseinrichtung (20', 60', 90') gemäß Anspruch 1, bei der die Segmente in ein zweites Formteil (14a) einschiebbar sind.

## Claims

1. Device for applying labels and other embedded parts for container blow moulding machines with separable mould parts (14, 114, 214), which enclose a mould space (16, 116, 216) and are fitted on a pair of spaced, movable plates (10, 110, 210), with a displaceable mould insert (20, 120, 220) for the labels (92, 192, 292), which can be so pushed into the mould space (14, 114, 214) [16, 116, 216] that it closes the mould space and forms a part of the inner surface of the mould space (16, 116, 216), and which can be taken out of the mould part into a label station (32, 132, 232, 134, 136), where it can be provided with a label, with devices for the reception and the retention of a label (92, 192, 292), making it accessible from the inside of the mould space (16, 116, 216), when the mould insert is located in the mould part, and with a device (40, 140, 240 ; 185) for displacing the mould insert (20, 120, 220) between the position in the mould part and the label receiving station, characterized in that, the mould insert is a mould insert system (20, 120, 220) with at least two label carrying segments (26, 28, 126, 127, 128, 129, 226, 228) for the labels, which are displaceable by the device (40, 140, 240 ; 185) alternately between the position in the mould part and corresponding label receiving stations (32, 34, 132, 134, 136), and in that label guides (60, 160, 260) are arranged to transfer a label to each of the label carrying segments from a label supply in a label magazine (90, 190, 290), when the segment in question is located in the associated label station (32, 34, 132, 134, 136).

2. Device according to claim 1, characterized by a guide (24) in the mould part (14, 214) connecting together two aligned access openings, which are in communication with the said mould space (16, 216), wherein the mould insert system (20, 220) comprises a one-part mould insert (22, 222), on which are located the label carrying segments (26, 28, 226, 228) and are [sic] reciprocatable firstly out of one of the access openings and then out of the other, and moreover so that each is applied to one of the label guides (60, 60a ; 260, 260a) outside the mould part (14, 214) in the vicinity of each of the said openings.

3. Device according to claim 1, characterized in that the plates (10, 110) are movable between different stations within the machine, and in that the label guides (60, 160) are fixed to the plates (10, 110) so as to follow their movement between the stations.

4. Device according to claim 2, characterized in that the label guides (260, 260a) and the label magazines (290, 290a) are fitted stationary to the frame (206) of the blow moulding machine above the plates (210).

5. Device according to claim 1, characterized in that the mould parts (114) define at least two mould spaces (116, 116a), each mould space (116, 116a) having an access opening to its interior, and wherein at least four of the label carrying segments (126, 127, 128, 129) are provided, and wherein the displacing devices (140, 185) of the mould insert system (120) displace at least two of the said segments (e. g. 127, 129, Fig. 5) through the access openings into the mould spaces (116, 116a) and at least two segments (e. g. 126, 128) into a label station (132, 134, 136).

6. Device according to claim 5, characterized in that one of the label guides (160, 160a, 160b) is located at each of the said segments (126, 127, 128, 129), when it is in the label station (132, 134, 136).

7. Device according to claim 6, characterized by at least a first, second and third label station (132, 134, 136) and at least a first and a second mould insertion station (138, 139) alternating between the label stations (132, 134 or 134, 136), and so that the displacing devices (140) reciprocate the said four label carrying segments (126, 127, 128, 129) between a first position where they are located in the first and second label stations (132, 134) and in the first and second mould insertion stations (138, 139) and a second position where the said segments assume the second and third label stations (134, 136) and again the said first and second mould insertion stations (138, 139), wherein the said displacing devices comprise single-acting cylinders (185, 185a), in order to displace the segments which assume the first and second mould insertion stations into the mould spaces (116, 116a).

8. Device according to claim 5, characterized in that the displacing devices comprises a displacing cylinder (140) for the alternate displacement of the said segments between three aligned label stations (132, 134, 136) and two mould insertion stations (138, 139), wherein each of the said mould insertion stations is provided between two label stations and furthermore three label guides (160, 160a, 160b) are so arranged that each can supply one segment which is located in one of the said label stations.

9. Device according to claim 1, characterized in that the label carrying segments (126, 127, 128, 129) are each separate segments, which are provided displaceably and removably in a carrier (121), and moreover in that a displacing cylinder (14) is provided for the reciprocating movement of the segments in the carrier from the label stations (132, 134, 136) to one of the mould insertion stations (138, 139), from whence the segments can be displaced into the mould spaces (116, 116a).

10. Device according to claim 9, characterized in that the displaceable carrier (12) is movable on a guide (143), wherein the said segments (126, 127, 128, 129) are selectively and slidably fitted to the carrier and the carrier has devices (140) in order to move it on the said guide, in order to reciprocate the said segments between the said label and mould insertion stations and devices (185, 185a) are provided for the movement of the segments in the mould insertion stations (138, 139) out of the said carrier into the mould spaces (116, 116a).

11. Device according to claim 9, characterized in that the mould part (114) includes at least two mould spaces (116, 116a) and the carrier (121) receives at least four of the individual segments (126, 127, 128, 129), the label and mould insertion stations. (132, 138, 134, 139, 136) being provided alternately along the said guide (143), with alignment of the mould insertion stations (138, 139) with the mould spaces (116, 116a) and the label stations (132, 134, 136) are offset from the mould spaces.

12. Device according to claim 11, characterized by three label guides (160, 160a, 160b) and two insertion cylinders (185, 185a) for the movement of the segments from the mould insertion stations into the mould spaces, wherein the insertion cylinders (155, 155a) [185, 185a] are each arranged between two of the label guides (160, 160a or 160a, 160b).

13. Device according to claim 1, wherein the segments (26, 28) can be pushed into a first of the separable mould parts (14), characterized by a second label transfer device (20', 60', 90') according to claim 1, in which the segments can be pushed into a second mould part (14a).

## Revendications

1. Dispositif pour introduire des étiquettes et d'autres pièces d'insertion pour machines de moulage par soufflage de récipients avec des parties de moule séparables (14, 114, 214) qui entourent un moule de soufflage (16, 116, 216) et sont montées sur une paire de plaques mobiles (10, 110, 210) situées à une certaine distance l'une de l'autre, avec un élément de moule mobile (20, 120, 220) pour les étiquettes (92, 192, 292) qui peut être introduit dans le moule de soufflage (14, 114, 214) de telle manière qu'il ferme le moule de soufflage et forme une partie de la surface intérieure du moule de soufflage (16, 116, 216) et qu'il puisse être enlevé de nouveau de la partie de moule et amené dans une station d'étiquetage (32, 34, 132, 134, 136) où il peut être muni d'une étiquette avec des dispositifs qui reçoivent et maintiennent une étiquette (92, 192, 292) et la rendent accessible de l'intérieur du moule de soufflage (16, 116, 216) lorsque l'élément de moule assurant l'insertion se trouve dans la partie de moule et avec un dispositif (40, 140, 240, 185) pour le déplacement de l'élément de moule (20, 120, 220) entre l'emplacement dans la partie de moule et celui dans une station d'étiquetage, caractérisé en ce que l'élément de moule mobile est un système (20, 120, 220) d'éléments de moule comportant au moins deux segments de support d'étiquettes (26, 28, 126, 127, 128, 129, 226, 228) pour les étiquettes qui peuvent être déplacés alternativement par le dispositif (40, 140, 240, 185) entre l'emplacement dans la partie de moule et celui dans les stations d'étiquetage correspondantes (32, 34, 132, 134, 136) et en ce que des dispositifs de guidage (60, 160, 260) des étiquettes sont placés dans un magasin à étiquettes (90, 190, 290) pour.le transport d'une étiquette sur chacun des segments de support d'étiquettes à partir d'une réserve d'étiquettes lorsque le segment correspondant se trouve dans la station d'étiquetage correspondante (32, 34, 132, 134, 136).

2. Dispositif selon la revendication 1, caractérisé par un dispositif de guidage (24) dans la partie de moule (14, 214) qui relie deux ouvertures d'accès situées dans le prolongement l'une de l'autre et qui est reliée au moule de soufflage (16, 216) cité, le système (20, 220) d'éléments de moule comprenant un élément. d'insertion (22, 222) d'une seule pièce sur lequel les segments (26, 28, 226, 228) de support d'étiquettes sont placés et peuvent se déplacer alternativement vers l'intérieur et vers l'extérieur d'abord par rapport à l'une des ouvertures d'accès puis par rapport à l'autre et en outre, en ce que chacun des dispositifs (60, 60a ; 260, 260a) de guidage des étiquettes est placé à l'extérieur de la partie de moule (14, 214) à proximité de chacune des ouvertures citées.

3. Dispositif selon la revendication 1, caractérisé en ce que les plaques (10, 110) peuvent être déplacées entre différentes stations à l'intérieur de la machine et en ce que les dispositifs (60, 160) de guidage des étiquettes sont fixés aux plaques (10, 110), de manière à suivre leur déplacement entre les stations.

4. Dispositif selon la revendication 2, caractérisé en ce que les dispositifs (260, 260a) de guidage des étiquettes et les magasins à étiquettes (290, 290a) sont fixés au-dessus des plaques (210) au cadre (206) de la machine de moulage par soufflage.

5. Dispositif selon la revendication 1, caractérisé en ce que les parties de moule (114) délimitent au moins deux moules de soufflage (116, 116a), chaque moule (116, 116a) comprenant une ouverture d'accès à son intérieur et quatre au moins des segments (126, 127, 128, 129) de support d'étiquettes étant prévus et les dispositifs (140, 185) de déplacement du système (120) d'éléments de moule déplaçant au moins deux des segments cités (par exemple 127, 129, Fig. 5) à travers les ouvertures d'accès dans les moules (116, 116a) et au moins deux segments (par exemple 126, 128) dans une station d'étiquetage (132, 134, 136).

6. Dispositif selon la revendication 5, caractérisé en ce que l'un des dispositifs (160, 160a, 160b) de guidage des étiquettes se trouve au niveau de l'un des segments cités (126, 127, 128, 129) lorsqu'il est dans la station d'étiquetage (132, 134, 136).

7. Dispositif selon la revendication 6, caractérisé par au moins une première, une deuxième et une troisième station d'étiquetage (132, 134, 136) et au moins une première et une deuxième station (138, 139) d'insertion dans le moule alternativement entre les stations d'étiquetage (132, 134 ou 134, 136) et en ce que les dispositifs de déplacement (140) déplacent d'un mouvement de va-et-vient les quatre segments (126, 127, 128, 129) cités entre une première position, dans laquelle ils se trouvent dans la première et la deuxième station d'étiquetage (132, 134) et dans la première et la deuxième station (138, 139) d'insertion dans le moule, et une deuxième position dans laquelle les segments cités occupent la deuxième et la troisième station d'étiquetage (134, 136) et, de nouveau, la première station citée et la deuxième station (138, 139) d'insertion dans le moule, les dispositifs de déplacement cités comportent des cylindres d'insertion (185, 185a), de manière à pousser dans les moules (116, 116a) les segments qui viennent occuper la première et la deuxième position d'insertion dans le moule.

8. Dispositif selon la revendication 5, caractérisé en ce que chaque dispositif de déplacement comporte un vérin de déplacement (140) pour le déplacement alternatif desdits segments entre trois stations d'étiquetage (132, 134, 136) situées dans le prolongement les unes des autres et deux stations (138, 139) d'insertion dans le moule, chacune des stations d'insertion citées étant prévue entre deux stations d'étiquetage et, de plus, trois dispositifs (160, 160a, 160b) de guidage des étiquettes étant disposés de telle manière que chacun d'eux peut alimenter un segment qui se trouve dans l'une desdites stations d'étiquetage.

9. Dispositif selon la revendication 1, caractérisé en ce que les segments (126, 127, 128, 129) de support d'étiquettes sont tous des segments séparés qui peuvent être déplacés et enlevés dans un support (121) et en ce que, par ailleurs, il est prévu un vérin de déplacement (140) pour le mouvement de va-et-vient des segments dans le support de la station d'étiquetage (132, 134, 136) à l'une des stations (138, 139) d'insertion dans le moule, à partir de laquelle les segments peuvent être poussés dans les moules (116, 116a).

10. Dispositif selon la revendication 9, caractérisé en ce que le support mobile (121) peut se déplacer sur un dispositif de guidage (143), les segments cités (126, 127, 128, 129) pouvant être montés sur le support de manière à pouvoir être enlevés à volonté et le support comportant des dispositifs (140) pour le déplacer sur ledit dispositif de guidage de manière à déplacer lesdits segments d'un mouvement de va-et-vient entre lesdites stations d'étiquetage et d'insertion dans le moule et le dispositif comportant des dispositifs (185, 185a) pour le déplacement des segments dans les stations (138, 139) d'insertion dans le moule à partir dudit support dans les moules (116, 116a).

11. Dispositif selon la revendication 9, caractérisé en ce que la partie de moule (114) comprend au moins deux moules (116, 116a) et que le support (121) reçoit au moins quatre des segments séparés (126, 127, 128, 129), les stations (132, 138, 134, 139, 136) d'étiquetage et d'insertion dans le moule étant disposés en alternance le long dudit dispositif de guidage (143), les stations d'insertion (138, 139) étant disposées par rapport aux moules (116, 116a) et les stations d'étiquetage (132, 134, 136) étant décalées par rapport aux moules.

12. Dispositif selon la revendication 11, caractérisé par trois dispositifs (160, 160a, 160b) de guidage des étiquettes et deux vérins (185, 185a) d'insertion pour le déplacement des segments de la station d'insertion dans le moule à l'intérieur des moules, le cylindre d'insertion (155, 155a) étant toujours placé entre deux des dispositifs (160, 160a ou 160a, 160b) de guidage des étiquettes.

13. Dispositif selon la revendication 1, dans lequel les segments (26, 28) peuvent être introduits dans une première pièce de moule (14) séparable, caractérisé par un deuxième dispositif (20', 60', 90') de guidage des étiquettes suivant la revendication 1, dans lequel les segments peuvent être insérés dans une deuxième partie de moule (14a).

FIG. 1

FIG. 2

FIG. 3

FIG. 4

EP 0 174 387 B1

FIG. 5

110   116   114   116a

132
126   188   134   129   188a
120   186   128   136
151
121   143
140
176
179
183
186a   176b
172   190b
190   192b
192   172b
138   139
160   160b
170   170b
185   192a   190a   170b
160a   170a
185   185a   VI

FIG. 6

114
110
120
188a   121
176a   145
143
160a   190b
181   192b
172a   179
186a
170a   164   162
185a   160b

EP 0 174 387 B1

3

FIG. 7

FIG. 8

FIG. 9

EP 0 174 387 B1